(19) **Europäisches Patentamt / European Patent Office / Office européen des brevets**

(11) **EP 3 816 665 B1**

(12) **EUROPEAN PATENT SPECIFICATION**

(45) Date of publication and mention
of the grant of the patent:
**15.05.2024 Bulletin 2024/20**

(21) Application number: **19206838.5**

(22) Date of filing: **04.11.2019**

(51) International Patent Classification (IPC):
**G01S 13/34** *(2006.01)*  **G01S 13/931** *(2020.01)*
**G01S 7/02** *(2006.01)*

(52) Cooperative Patent Classification (CPC):
**G01S 13/931; G01S 7/023; G01S 13/343**

(54) **INTERFERENCE SUPPRESSION IN A FMCW RADAR SYSTEM**

STÖRUNGSUNTERDRÜCKUNG IN EINEM FMCW-RADARSYSTEM

SUPPRESSION DE L'INTERFÉRENCE DANS UN SYSTÈME RADAR FMCW

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**05.05.2021 Bulletin 2021/18**

(73) Proprietor: **NXP B.V.**
**5656 AG Eindhoven (NL)**

(72) Inventors:
• **LIN, Yu**
**Redhill, Surrey RH1 1QZ (GB)**
• **LAGHEZZA, Francesco**
**Redhill, Surrey RH1 1QZ (GB)**

(74) Representative: **Hardingham, Christopher Mark**
**NXP Semiconductors**
**Intellectual Property Group**
**Abbey House**
**25 Clarendon Road**
**Redhill, Surrey RH1 1QZ (GB)**

(56) References cited:
**DE-B3-102018 102 816     US-A1- 2016 291 130**

• **MURALI SRIRAM ET AL: "Interference detection in FMCW radar using a complex baseband oversampled receiver", 2018 IEEE RADAR CONFERENCE (RADARCONF18), IEEE, 23 April 2018 (2018-04-23), pages 1567-1572, XP033357124, DOI: 10.1109/RADAR.2018.8378800 [retrieved on 2018-06-08]**

## Description

Field

The present specification relates to radar and in particular to digital signal processing units for frequency modulated continuous wave, FMCW, radar receiver modules, and to related methods for suppressing interference in frequency modulated continuous wave (FMCW) radar systems.

Background

A variety of different radar techniques are known generally and radar can be used in a wide variety of applications. One particular application of radar systems is to vehicles and in particular in relation to vehicle safety systems and/or autonomous vehicles.

As the number of vehicles equipped with radar systems is increasing and likely to proliferate further, a particular challenge for radar systems in the automotive area is the potential for radar-to-radar interference. Frequency modulated continuous wave (FMCW) radar systems are commonly used in automotive radar systems as the frequency modulation waveform (also called a chirp) is particularly suitable waveform for automotive radar systems owing to its accuracy and robustness. Implementations in which a sequence of short duration frequency chirps are transmitted has favorable properties with respect to the detection of objects moving with a non-zero relative radial velocity.

Typically, stretch processing is used to convert radio frequency (RF) information to the intermediate frequency (IF) by using an analog mixer and anti-aliasing filtering (AAF). Multiple fast Fourier transforms (FFT), along fast time, slow time and multiple channels, may be used to extract information about targets' range, velocity and angle of arrival from a phased array or multiple input multiple output (MIMO) radar. Undesired signals from other radar or communications systems that use the frequency spectrum around the instantaneous frequency of the radar while sampling can be seen as interference. The interference will be down converted to the receiver bandwidth and processed in the same way as the desired signal reflected from a target.

Interference scenarios can happen when two radars (victim and interferer) that are in a common visible path (e.g. line of sight (LOS) and/or reflection and/or diffraction) somehow access the medium using similar carrier frequency and bandwidth at the same time, and making use of non-orthogonal waveforms with a perceivable power. FMCW Interference can be created by correlated and uncorrelated FM sources. Correlated FM sources can create false targets while uncorrelated FM sources (which are the more likely case), can cause reduced dynamic range and sensor blindness.

FMCW-to-FMCW interference levels and occurrences can vary from application to application and from radar configuration to radar configuration. For example, medium range radar (MRR) and short range radar (SRR) can suffer more from the interference problem owing to their larger RF excursion, field of view (FOV) and deployment.

When dealing with FMCW interference different options and strategies be considered at the radar system level. Detection of interference should ideally occur as soon as possible and preferable before Range Doppler processing and the occurrence of detected interference, as well as its energy, can be passed to higher radar system layers. Detection and Avoidance involves the detection of the interference and then changing radar operation parameters to try and reduce the interference in the next system cycle. For example the radar operation parameters can be randomly and blindly changed or the radar system can derive a best time and frequency for subsequent measurements. Detection and Mitigation involves the detection of interference and then estimation of some of the interference parameters (e.g. time duration, frequency, etc.) to try and reduce the interferer components in the receive radar signals. Detection, mitigation and avoidance combines aspects of the three preceding strategies. The interference detection process is common to all of these. XP033357124 and US2016/0291130A1 each describes interference detection in a FMCW radar system.

Hence, improved interference suppression techniques may lead to improved mitigation and/or avoidance mechanisms.

Summary

The invention is defined in apparatus claim 1 and in corresponding method claim 9. According to a first aspect of the present disclosure, there is provided a digital signal processing, DSP, unit, for a frequency modulated continuous wave, FMCW, radar receiver module according to claim 1. Thereby the DSP is configured to process the complex baseband signal to extract the interference signal in the image band (containing interference signal and noise) and to use that to suppress the interference signal in the desired band) containing interference signal and wanted signals) to achieve an interference suppressed operation.

In one or more embodiments, the combinatorial logic is configured to subtract the mirrored signal from the in-band IF signal over the interference window.

The processing subunit comprises a delay unit configured to delay the digital in-phase signal; a transform unit configured to apply a Hilbert transform to the digital quadrature signal; further combinatorial logic unit configured to add the delayed digital in-phase signal and the Hilbert-transformed digital quadrature signal to provide a one of the in-band IF signal and the image-band IF signal; and yet further combinatorial logic unit configured to subtract the Hilbert-transformed digital quadrature signal from the delayed digital in-phase signal to provide the other of the in-band IF signal and the image-band IF signal. The signals are added to provide the in-band IF signal in case the chirp slope is positive - that is to say the chirp frequency is increasing, and subtracted to provide the in-band IF signal in case the chirp slope is negative - that is to say the chirp frequency is decreasing.

In one or more embodiments, the power-check unit is configured to check the power in each of the image-band signal and a high-pass filtered version of the in-band signal, to identify the crossing-interference chirp, and to identify an interference window, estimate the interference crossing moment, and to mirror the image band IF signal, across the interference window, about the interference crossing moment, only in response to identification of crossing-interference chirp.

In one or more embodiments, the power check unit is configured to apply a threshold level corresponding to a noise floor and to identify the crossing-interference chirp in response to the signal exceeding the threshold level.

In one or more embodiments, the digital signal processing unit further comprises means to select the interference window. The interference window selection means may include a power level monitor. In one or more other embodiments the interference window selection means may include comparing samples with a threshold power.

According to a second aspect of the present disclosure, there is provided a frequency modulated continuous wave, FMCW, radar receiver module configured to suppress interference and comprising a DSP unit as defined above; a front-end unit configured to receive a relatively higher frequency radar signal and provide a relatively lower intermediate frequency, IF, digital in-phase signal and a relatively lower IF digital quadrature signal.

In one or more embodiments, the front-end unit comprises a low noise amplifier, a quadrature mixer, and first and second IF baseband circuit chains each comprising a variable gain amplifier, bandpass filters, and an analogue-to-digital converter, ADC

According to a third aspect of the present disclosure, there is provided a method of interference suppression in a FMCW radar signal according to the independent method claim.

In one or more embodiments, said mirroring and subtracting comprises: mirroring the image-band signal, in the time domain, about the crossing moment, to provide a processed image-band signal; and subtracting a processed image-band signal from the in-band signal, to provide an interference-suppressed IF signal.

In one or more embodiments, extracting a digital in-phase signal and a digital quadrature signal from a received radar signal comprises receiving the relatively high frequency radar signal down-converting the radar signal to a relatively lower intermediate frequency, IF, and digitising the IF signal to provide the digital in-phase signal and the digital quadrature signal.

In one or more embodiments, the method further comprises applying at least one further interference mitigation technique. Since interference which is present only in the in-band signal and does not cross the mirror band signal cannot be effectively suppressed by the methods discussed in this disclosure, it may be appropriate to additionally apply other interference mitigation techniques, such as will be well known to the skilled person.

There may be provided a computer program, which when run on a computer, causes the computer to configure any apparatus, including a circuit, controller, sensor, filter, or device disclosed herein or perform any method disclosed herein. The computer program may be a software implementation, and the computer may be considered as any appropriate hardware, including a digital signal processor, a microcontroller, and an implementation in read only memory (ROM), erasable programmable read only memory (EPROM) or electronically erasable programmable read only memory (EEPROM), as nonlimiting examples. The software implementation may be an assembly program.

The computer program may be provided on a computer readable medium, which may be a physical computer readable medium, such as a disc or a memory device, or may be embodied as a non-transient signal.

Brief description of Drawings

Embodiments will be described, by way of example only, with reference to the drawings, in which

Figure 1 shows a schematic block diagram of a radar system using the interference suppression technique according to one or more embodiments;
Figure 2 shows a schematic block diagram of a radar sensor module of the radar system shown in Figure 1 and implementing the interference suppression technique according to one or more embodiments;
Figure 3 shows a flow chart illustrating a method of operation of the radar system if Figure 1;
Figure 4 shows a waveform diagram illustrating a chirp signal used by the radar system;
Figure 5 shows a plot of frequency against time illustrating the general principle of operation of the radar system;
Figure 6 shows a flow chart illustrating the method of operation of the radar system;
Figure 7 shows a plot of frequency against time illustrating the effect of an interfering radar system;
Figure 8 shows various signals associated with two chirps in the time and frequency domains;
Figure 9 shows the analogue front-end of a receiver, configured to provide I and Q (in-phase and quadrature) digital data;
Figure 10 shows an analogue front-end, together with digital processing stage configured to provide I and Q (in-phase and quadrature) digital data;
Figure 11 shows a relevant parts of a digital signal processor for suppressing an interference signal;
Figure 12 shows an example radar range profile, for samples including an incoherence interference signal;
Figure 13 shows the same data in in the frequency domain;
Figure 14 shows a simulated down-converted interference signal, with thermal noise, in a real receiver and separately as in-band signal and image band signals;
Figure 15 shows the same simulated down-converted interference signal, but excluding thermal noise;
Figure 16 shows a signal after interference is suppressed in the time domain;
Figure 17 shows the plot of amplitude against frequency in the IF band without a crossing interference, with a crossing interference and with the crossing interference but after suppression; and
Figure 18 shows a flowchart of a method of suppressing an interference signal, according to one or more embodiments

It should be noted that the Figures are diagrammatic and not necessarily drawn to scale. Relative dimensions and proportions of parts of these Figures may be shown exaggerated or reduced in size, for the sake of clarity and convenience in the drawings. The same reference signs are generally used to refer to corresponding or similar features in modified and different embodiments

Detailed description of embodiments

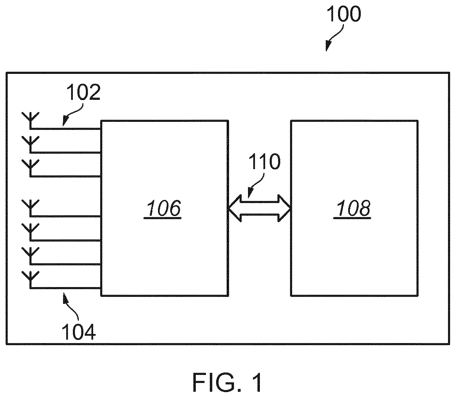

With reference to Figure 1 there is shown a schematic block diagram of a radar system 100 in which the interference suppression technique may be used. In the described embodiments, the radar system is an automotive radar system, but the technique is not necessarily limited to that application. The radar system 100 includes a plurality of transmitting antennas 102 and a plurality of receiving antennas 104 connected to a radar sensor module 106, and as ushc as a "MIMO" (multiple input multiple output) radar system, although the present disclosure is not limited thereto. The radar sensor module 106 is connected to other higher level parts 108 of the overall radar system 100 by a radar system bus 110. The exact structure of the overall radar system 100 is incidental and the interference suppression technique can be used in a wide range of radar systems and is not limited to the specific radar system 100 illustrated in Figure 1. Also various features of the radar system may be varied as it will be apparent to a person of ordinary skill in the art. For example, the number of transmitting and receiving antennas can be more or fewer and various functions can be distributed differently between the radar sensor module 106 and the remainder of the radar system 108.

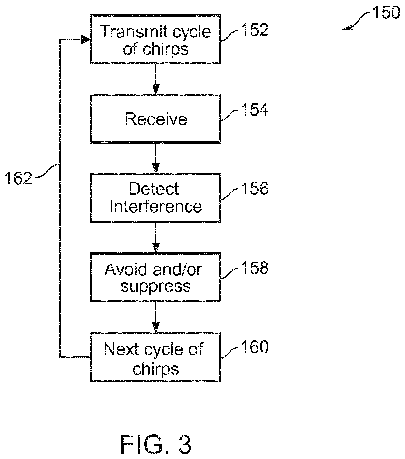

Also some functionalities may be implemented in dedicated hardware and others in software and others in combinations of hardware and software. In one or more embodiments, the sensor module 106 may be provided in the form of an integrated circuit in a package.

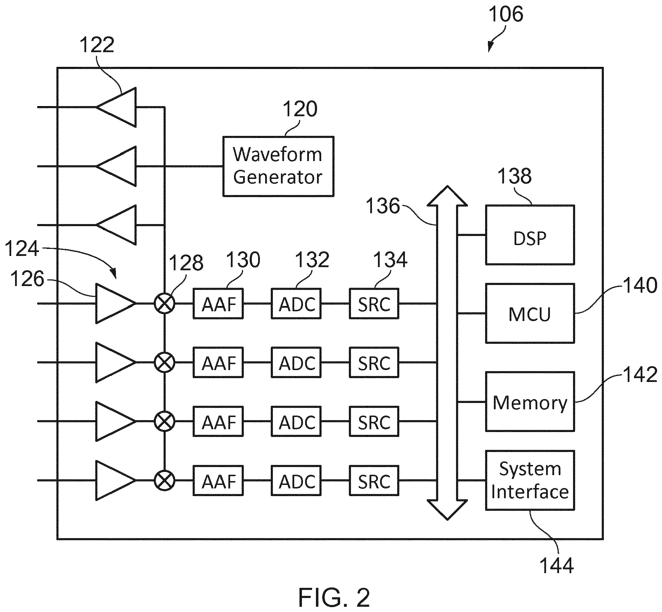

Figure 2 shows a schematic block diagram of the radar sensor module 106 of Figure 1 in greater detail. The radar sensor module includes a waveform generator 120 configured to generate radar cycles, each comprising a sequence of multiple chirp signals, and having an output connected to an input of a respective power amplifier 122 for each of three transmitter chains, for example. The respective outputs of the power amplifiers 122 are each connected to a respective one of the transmission antennas 102. Four receiver chains, for example, are also provided each of which is connected to a respective one of the receiver antennas 104. Each receiver chain 124 generally includes a low noise amplifier 126, a mixer 128, to which the output of the waveform generator 120 is also connected, an anti-aliasing filter 130, an analogue to digital converter 132 (having a sampling frequency of $f_{adc}$) and a sample rate conversion device 134. The output of each receiver chain is connected to a bus system 136 to which a digital signal processor (DSP) 138, a microcontroller unit (MCU) 140, a memory 142 and a system interface 144 are each connected. DSP 138 is used to implement various data processing operations as described below, MCU is used to generally control operation of the sensor module 106 and also to carry out various higher level data processing operations, memory 142 provides local data storage for the DSP 138, MCU 140 and sensor module 106 generally and system interface 144 provides an interface to the remainder of the radar system 108 via system bus 110.
The overall method of operation of the FMCW radar system 100 will initially be described with reference to provide context for the description of the interference suppression technique. The overall method of operation of FMCW radar systems, without the interference suppression technique, is generally understood by a person of ordinary skill in the art and various details will be omitted from the following for the sake of brevity and to avoid obscuring the description of the interference suppression technique.
As illustrated in Figure 3 the method 150 of operation of the radar system 100 generally involves transmitting 152 a sequence of chirps, e.g. 128 chirps, via transmitting antennas 102 as a first cycle of operation of the radar system.

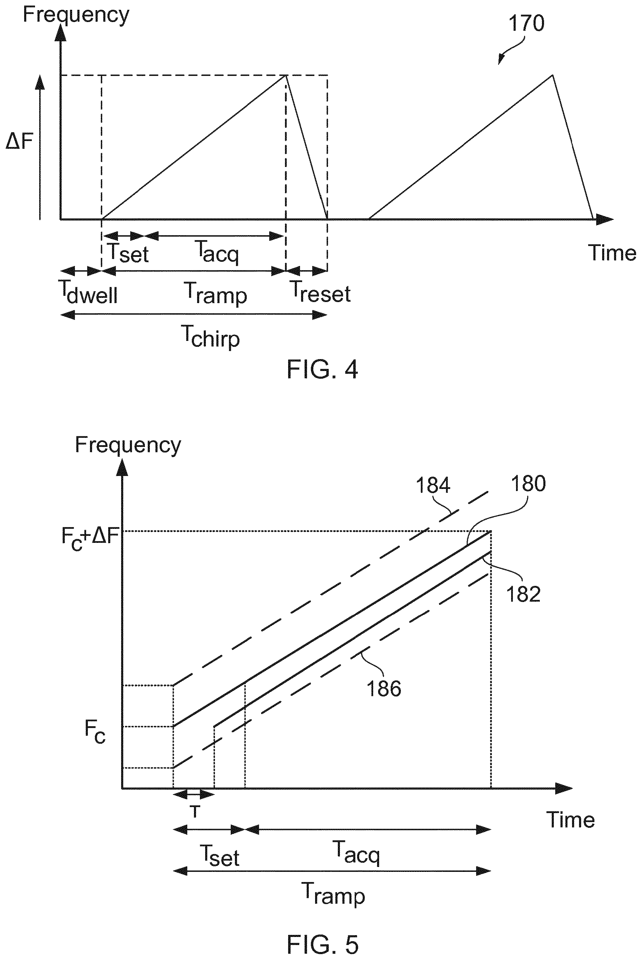

Figure 4 shows a plot 170 of signal frequency against time illustrating a first and second chirp signal of a cycle of chirps. As will be appreciated, the chirp signal is effectively a frequency ramp which periodically modulates a sinusoidal carrier wave, at frequency $F_c$, e.g. 79GHz, with a change in frequency $\Delta F$. The overall chirp signal has a period $T_{chirp}$, which comprises an initial dwell time, $T_{dwell}$. This dwell time is simply a pause between chirps. The dwell time is followed by a linear frequency

ramp with duration $T_{ramp}$, followed by a reset time with duration $T_{reset}$. Two other time periods are relevant to operation of the receiver channels. There is a settle time, $T_{set}$, after $T_{dwell}$, and which starts at the start of the ramp signal. The settle time, $T_{set}$, provides a time for a phase locked loop (PLL) used to generate the ramp signal to settle to its linear behaviour. Also, any reflected signals may return to the radar system during the settle time. There is then a data acquisition period, $T_{acq}$, which begins at the end of the settle time and which ends at the end of the frequency ramp. The receiver channels are active to acquire data based on the signals present in the receiver channels during this data acquisition time, $T_{acq}$, as explained in greater detail below.

Although a linearly increasing frequency ramp is shown in Figure 4, it will be appreciated that the technique is not necessarily limited to such a chirp signal and that other frequency modulation schemes may also be used. After the cycle of chirp signals has started to be transmitted, the receiver channels 124 are activated to start detecting signals picked up by receiver antennas 124 during the time $T_{acq}$. These signals will include noise in the receiver channels and may include reflected chirp signals from targets and/or interference. Hence, at 154, the radar system starts to process signals received on the receiving antennas 104. It will be appreciated that, although the following description will refer to the increasing frequency Tramp period, the present disclosure is not limited thereto, and may be equally applicable detecting and suppressing interference during to a decreasing frequency part of a chirp (shown in figure 4 as Treset).

As illustrated in Figure 5, the transmitted chirp signal 180 starts at the carrier frequency $F_c$ and increases by $\Delta F$ over a time $T_{ramp}$, and that chirp signal may be reflected by an object and be received as a reflected signal 182 delayed by a time, $\tau$, being the time of flight. As can be seen in Figure 5, the delay, $\tau$, is relatively short and may be less than $T_{set}$, and so any reflected chirp may have started to be received at the receiver channel by time the data acquisition starts. In the receiver channels, during the data acquisition period, $T_{acq}$, the signal in the receiver channel, after low noise amplification, is down converted by being mixed with the modulating waveform, to result in an intermediate frequency, IF, signal. In the down conversion operation, the transmitted signal is mixed with the signal in the receiver channel and any received chirp signal present is effectively the time delayed transmitted signal in the analog domain. In case the relative velocity between the radar system and the reflecting object is zero the time delayed signal is simply an attenuated and phase rotated version of the transmitted signal. The result of the down conversion operation is a sine wave oscillating at the so called beat frequency. The beat frequency, $F_{beat}$, depends on the distance to the reflecting object $D$, the difference between the start and the stop frequency of the ramp $\Delta F$, and the duration of the ramp $T_{ramp}$ as follows:

$$F_{beat} = \Delta F / T_{ramp} \times 2D/c$$

where c is the speed of light.

In case the relative velocity is non-zero the corresponding Doppler frequency is added to the beat frequency. If the duration of the chirp is short, e.g. shorter than $100\mu s$, and the frequency ramp $\Delta F$ is at least several tens of MHz, then the Doppler frequency is very small compared to the beat frequency and can be ignored in the calculation of the distance, D. The Doppler component will, however, change the phase of the received frequency ramp 182. A well-known technique, the two-dimensional Fast Fourier Transformation (FFT), may be used to calculate the relative radial velocity as described in greater detail below. In such FMCW radar systems the relation between the distance, D, and the beat frequency, $F_{beat}$, is linear and the beat frequency increases with increasing distance to the reflecting object.

In practice multiple reflections can be present in the field of view of the radar system. In this case the output of the down conversion operation is a summation of sine waves oscillating at the beat frequencies corresponding to the distances to the reflecting objects. As illustrated in Figure 5 the anti-aliasing filters 130 in the receiver channels have an upper aliasing low pass filter boundary 184 and a lower aliasing low pass filter boundary 186 as represented by dashed lines in Figure 5. The anti-aliasing filters 130 typically are designed to have a cut-off frequency which is less than, or significantly less than, half the sampling rate, $f_{adc}$, of the ADCs 132 in the receiver channels and determine the maximum beat frequency and consequently the maximum detectable range. Selecting a cut-off frequency which is significantly less than half the sample rate can relax the complexity and power of the anti-aliasing filter. Furthermore, the anti-aliasing filters also reduce the amount of unwanted noise and interference that can be captured at the IF signal frequency. A sample rate conversion device 134 can be provided in each receiver chain in the event that the sampling frequency of the ADC, $f_{adc}$, is greater than the maximum beat frequency that the system wants to detect, in order to effectively reduce the output data rate of the ADCs.

Returning to Figure 3, at 156 interference detection can be carried out on the signals in the receiver channel, as discussed in more detail below. The higher level processes of the radar system may carry out appropriate avoidance strategies as are generally known in the art at 158. Alternatively, or in addition, the system may apply suppression according to one or more embodiments as described hereinbelow.

As discussed above, the receiver channels process the received signals on the receiver antennas 104, be down conversion, anti-aliasing filtering, analog-to-digital conversion and any sampling rate conversion. The digital samples are then processed by the digital signal processor 138, including estimation of the magnitude of the beat frequencies. As mentioned above, a Fast Fourier Transform based approach may be used to estimate the beat frequencies and hence distances.

The frequency at which the samples are taken by the ADCs 132 is $f_{adc}$. According to the sampling theorem the maximum frequency that can be represented by the digital signal is the Nyquist frequency which is equal to half of $f_{adc}$ in case of real valued samples. Reflecting objects at large distance can have beat frequencies exceeding half of $f_{adc}$. Their position in the frequency spectrum is the position in the baseband spectrum plus an unknown integer (N) multiple of $f_{adc}$. That is to say: abs($f_{in}$ - N*$f_{adc}$).

In some cases the far-away reflectors are not of interest. To prevent this undesired aliasing the anti-aliasing filters 130 are used, together with a digital low pass filter inside the digital signal processor DSP 139.. These filters strongly attenuate the frequency components exceeding the the frequency band of interest. In Figure 2 the anti-aliasing filters are realized as a combination of analog and digital filters.

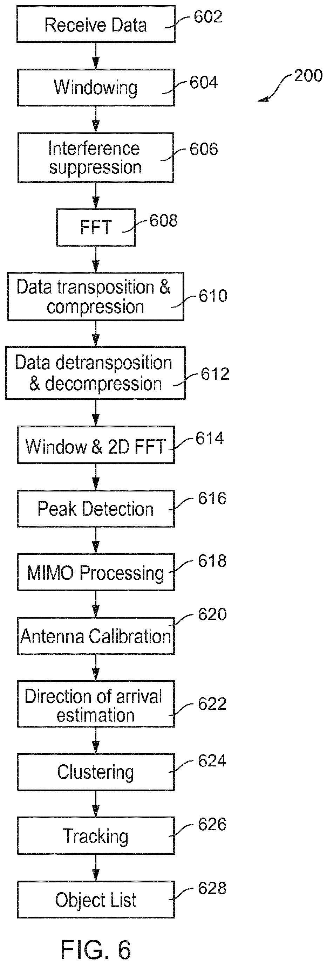

Figure 6 shows a flow chart 200 illustrating typical data processing operations carried out by the DSP and MCU in processing the digital samples and carrying out various higher level radar system operations. At 602 the digital samples of the signals the receiver channels are received by DSP 138. At 604, a conventional windowing can be applied to the receiver data, firstly to select a subset of samples from the total samples per chirp, and secondly to shape the frequency spectrum in such a way that the sidelobes are sufficiently small. Chebyshev or Hamming windows may be used, for example. At 606 an interference and/or suppression process may be applied to the digital samples of the signal from only a one of the receiver channels, according to one or more embodiments. Steps 608 to 628 are generally conventional but are applied to the receiver data from the receiver channels if modified based on the results of the interference suppression process 606. Typically, steps 602 to 618 may be carried out by the DSP and steps 620 to 628 may be carried out by the MCU.

At 608 a first FFT is applied to each received chirp to convert the time signal into the frequency domain. The frequency components for each chirp are effectively a matrix of samples. If the samples were stored in a row-by-row fashion then the samples would be stored at contiguous memory addresses. Then for a second FFT the processor would need to retrieve the sample data with a fixed offset (for example, for all samples corresponding to FFT bin 1 from all chirps). This typically would be time consuming because the samples would need to be transferred one by one over the bus which would be time consuming. Hence, at 610 the matrix of frequency components for each chirp is transposed and all the samples are stored in such a way that upon read a set of samples can be read without offsets. Compression may also be applied to save memory.

Hence, at 612, the data is decompressed and de-transposed so that a second FFT operation may be carried out at 614 over all the samples in a single column to provide the distance/velocity 2D spectrum. At this stage multiple 2D spectra are available, one for each receiving antenna. Optionally, the power values of these spectra may be averaged. At 616 a peak detection process is applied to the power values and may use a Constant False Alarm Rate (CFAR) approach. The threshold for the CFAR approach may be calculated along the Doppler frequency (relative velocity) dimension. Preferably an Ordered Statistics (OS) CFAR algorithm is used. In this algorithm all samples belonging to the Doppler spectrum of the distance being processed are ordered according to their power value after which the Nth biggest sampled is used to calculate the detection threshold. The receiver receives a summation of transmitted signals when multiple transmitters are active at the same time, so at 618 MIMO processing is carried out to separate the received signals based upon time, frequency offsets or codes.

The MCU may then carry out any antenna calibration at 620 and at 622 the direction of arrival is estimated for the samples for which the power exceeds the CFAR threshold. Further processing may optionally be applied in the form of data clustering 624, object tracking 626 (for instance using a Kalman filter) and object listing 628. The results of the radar range processing may then be passed up to higher system levels of the radar system for further action as appropriate.

The interference suppression technique carried out at step 606 will now be described in greater detail. As illustrated in Figure 6, this technique is applied prior to the first Fourier Transform and therefore is carried out in the time domain rather than the frequency domain. The interference suppression technique is applied to receiver signals in a one of the receiver channels. The results of the interference suppression technique may then be applied to the receiver signals in all of the receiver channels to improve the radar system performance.

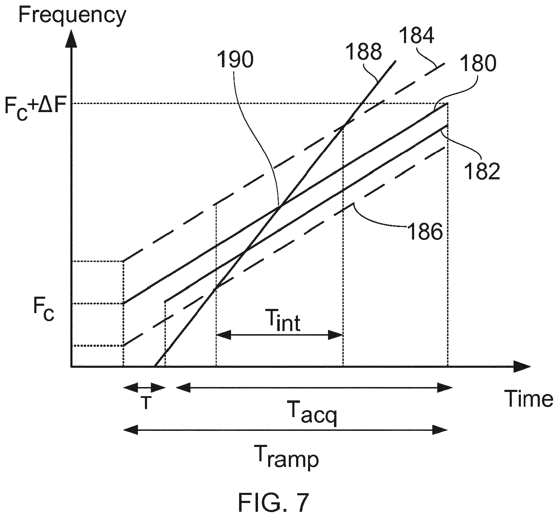

Figure 7 shows a plot of frequency against time similar to that of Figure 5 and illustrates the effect of an interference. For a transmitted chirp 180, the received time delayed, by time τ, chirp corresponds to line 182. If there is an interfering FMCW radar within the field of view of the radar system, then the transmitted chirp of the interfering radar system may have a frequency ramp as indicated by line 188. Owing to the lower anti-aliasing LPF boundary 186 and the upper anti-aliasing LPF boundary 184, the interfering chirp will be present in the receiver channel for an interference time 189, $T_{int}$. Hence, during the data acquisition period $T_{acq}$, corresponding to and associated with the originally transmitted chirp signal 180, some of the signal in the receiver channel may correspond to a reflected chirp 182 and other parts of the received signal, during time $T_{int}$, may correspond to a mixture of interfering chirp and reflected chirp. For future reference, it will be noted that the frequency of the interfering signal crosses the transmitted signal at a time T0 190, which is generally at the midpoint of the interference time, $T_{int}$

As discussed above, and illustrated in Figure 2, during the data acquisition time, $T_{acq}$, corresponding to the original transmitted chirp, the receiver signal in a receiver channel is down converted, low-pass filtered, analog to digital converted, any sample rate conversion applied and then the digital data passed to the DSP for processing. Each chirp of a radar cycle is sampled a number of times by the ADC during the data acquisition time, $T_{acq}$, and the sampled digital data corresponding to each transmitted chirp is stored in the DSP 138 for processing.

Turning now to consider the interference suppression in more detail, first of all it should be noted that, depending on the slope (upward or downwards) of the transmitted frequency ramp in the chirp, the reflected signals after down conversion and low pass filtering have beat frequencies only on one side (left of right, respectively - that is to say, lower or higher respectively) of the frequency spectrum.

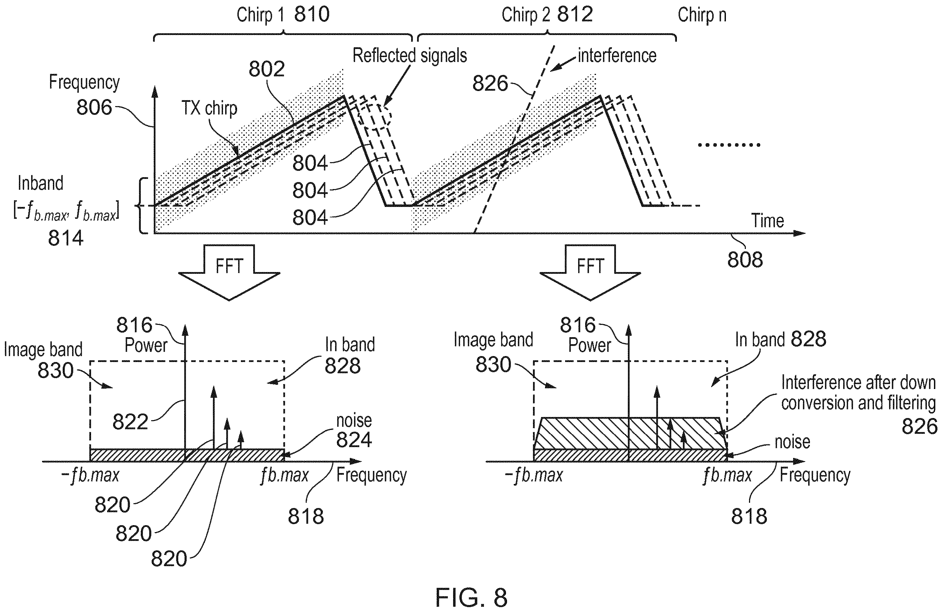

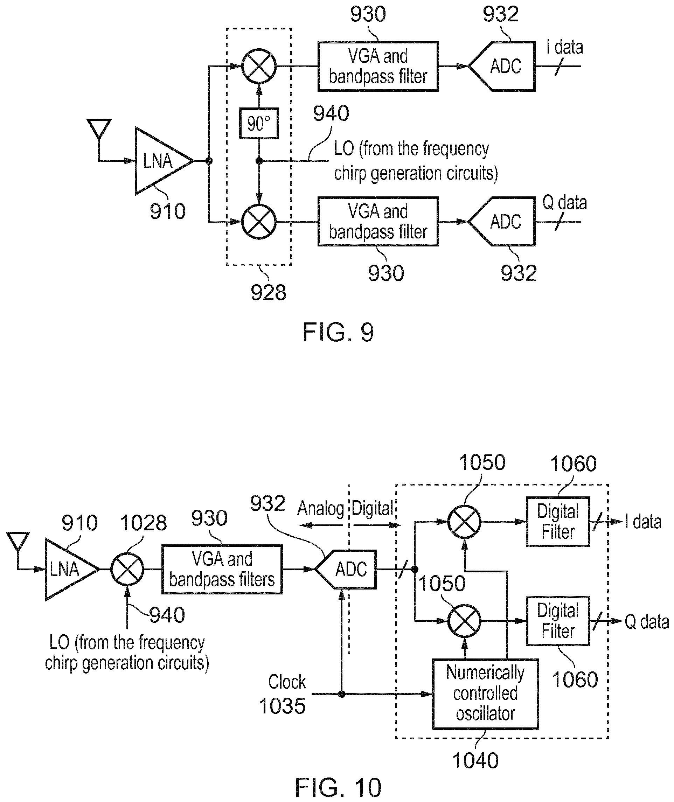

This is illustrated in figure 8. The top part of figure 8 shows transmitted chirps 802 (solid line), from a transmitter, together with several reflected signals 804 (dashed line) from various objects, in this instance three such reflected signals, on a plot of frequency 806 against time 808. Considering chirp 810, after down conversion of received signals and low pass filtering the down converted signals to limit to a frequency range *[-fb.max, fb.max]* 814, the resulting signals are then digitized by the ADC and transformed by applying a fast Fourier transform, FFT. It can be seen on the resulting plot of power 816 against frequency 818, which is the spectrum of the complex IF signal after quadrature mixer 928 and the complex baseband shown in figure 9. This shows that the beat frequency signals, or beats, 820 are only on one side (the "in-band" 828) of the spectrum, whereas there is noise across both sides of the complete frequency range including both the in-band side 828 and the image band 830. The beats have higher signal levels than a noise floor 824, as shown. Note that there is no main power peak 822 (which would otherwise be at the centre of the spectrum, on the axis 816, since signals at this location of a close to it filtered out by the high pass filter in the baseband (130 or 930)

It will be appreciated that due to the application of a frequency chirp in the transmitted signal, in which the start and end frequencies of the transmitted signals, the chirps, and the duration can each be changed depending on the modulation scheme and use cases, thus although the centre of the frequency range remains fixed, fb_max can be adapted (typically, the value of this "maximum beat frequencies to be detected" is set by the anti-aliasing LPF and the digital LPF). As a consequence, the in-band frequency range [-fb.max, 0], and the image band frequency range [0, fb.max] is not constant or fixed, but is adaptable.

Now considering chirp 812, during this time an interfering signal is received as shown at 826. As can be seen, this interfering signal crosses the complete in-band frequency range *[-fb.max, fb.max]* 814. So after filtering and applying a transform to the frequency domain, the interfering signal is not limited to the desired ("in-band") IF band, but extends to the "image band" on the other side of the main power frequency, similar to the noise. The present inventors have appreciated that it is possible to use this phenomenon to suppress and/or at least partially cancel the interfering signal from the reflected signal or signals. One example technique will now be described in more detail.

The down conversion previously mentioned with respect to figure 2 at 128 may use a complex receiver architecture. In a complex receiver architecture, the down conversion is done, after amplification in a front end Low Noise Amplifier (LNA) 910, by means of a quadrature mixer 928, which mixes the signal and a 90° phase-shifted version of the signal with a local oscillator (LO) signal 940, which is provide from the frequency chirp generation circuit. The down converter may include two IF, or baseband, circuit chains, including variable gain amplifier baseband filters 930 and ADCs 932, as shown in figure 9. By processing these data separately, the in-band data and image band 830 data may be processed relatively independently.

In other embodiments, the analog part of the receiver processes real data only, and the I and Q signals are separated in the digital processing stage. This is illustrated in Figure 10, in which after the LNA 910, the signal is downconverted by mixing it an mixer 1028 with the local oscillator signal 940, the I have signal is passed through a variable gain amplifier baseband filter 930 and then digitised in the ADC 932. The digital signal is then processed to provide quadrature I data and Q data in the digital domain, for example as shown. In this example the ADC clock 1035 drives a numerical controlled oscillator 1040, two separate outputs from which are mixed, at mixers 1050 with the output from the ADC and then digitally filtered by means of digital filters 1060, to provide respective digital I data and Q data.

Once the in-phase, I, digital data and quadrature, Q, digital data have been separately identified, the interference signal may be suppressed. In summary, since the image band comprises only the interference signal and noise whereas the in-band signal comprises the required beat signals together with the interference signal and noise, the image band signal is processed and subtracted from the in band signal.

In one or more embodiments the signal processing is done in the time domain (that is to say prior to transforming into the frequency domain by means of a FFT or similar). In order to mirror the image band signal onto the in-band signal, a reflection point (specifically, a moment in time) has to be selected in order to achieve the mirroring. The appropriate moment for the reflection point is the crossing moment T0 when the interference signal frequency crosses the transmitted signal frequency, shown at 190 in figure 7 as mentioned above.

It should be noted, that the above technique is generally only going to suppress an interference signal if that interference signal is present in both the image band and in-band. This will be the case if the interference signal crosses both bandwidths, which does occur in figure 7 - over the internal Tint.

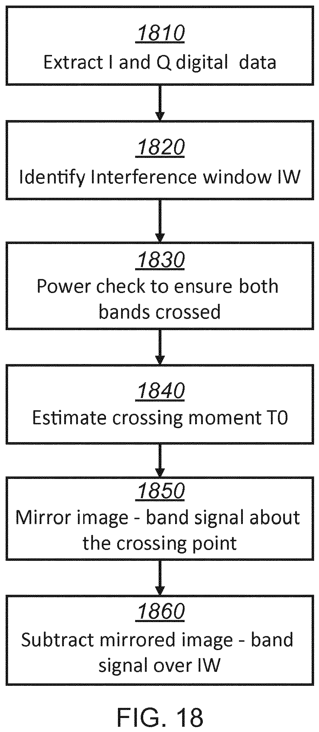

Turning now to figure 18, a method of suppressing interference according to one or more embodiments is shown in figure 18. At step 1810 the I and Q digital data are extracted from the received signal. At step 1820 an interference window IW is identified. This may be achieved by monitoring the power threshold in the image band. Since the reflected signals only have beat frequencies in the in-band, a power level in the image band which is significantly above a noise threshold may be indicative of an interference signal. At step 1830 the power is checked in the image band and the power of a high-pass filtered version in the image band is also checked. High power levels in both bands may be indicative that the identified interference crosses both bandwidths. At step 1840 the crossing point or moment T0 of the interference signal is estimated: this may be done for example using cross-correlation on the image band time domain signal. The crossing point estimated may be improved by known techniques such as over sample power checking, etc. At step 1850 the image band signal is mirrored - in the time domain - about the identified crossing point. And at step 1860 the mirrored image band signal is subtracted from the in-band signal - still in the time domain - across the duration of the interference window.

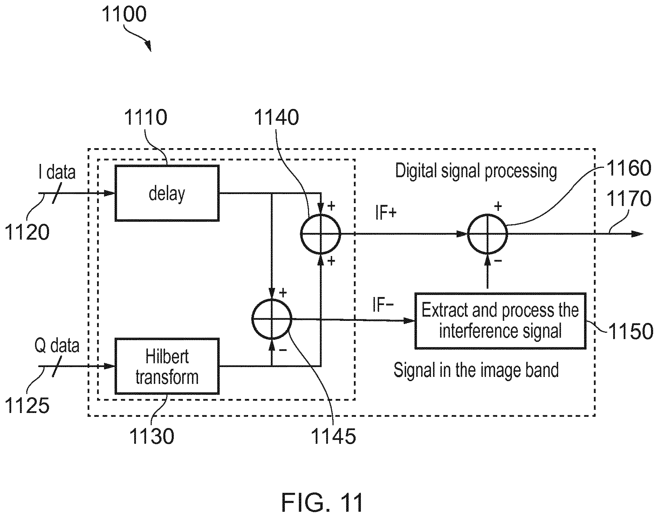

Turing back to figure 11, figure 11 shows a relevant parts of a digital signal processor for suppressing an interference signal. In particular, the figure shows a processing subunit 1100. Digital in-phase signal, I data, 1120 is input to the subunit along with digital quadrature data Q data, 1125. The processing subunit comprises a delay unit 1110 configured to delay the digital in-phase signal, tougher with a transform unit 1130 configured to apply a Hilbert transform to the digital quadrature signal. The Hilbert transformed is a linear operator that can involves the Q data with the function $(1/\pi t)$. The effect in the frequency domain is to impart a phase shift of 90° to every Fourier component of the original data.

A combinatorial logic unit 1140 - the digital equivalent to an analog mixer - is configured to add the delayed digital in-phase signal and the Hilbert-transformed digital quadrature signal to provide the in-band IF signal IF+; and another combinatorial logic unit 1145 is configured to subtract the Hilbert-transformed digital quadrature signal from the delayed digital in-phase signal to provide the image-band IF signal IF-. The skilled person will appreciate that either I + i*Q, or I- i*Q may be selected as the in band signal, depending on whether the chirp is going upward or downward (which is of course known in advance); the image band signal is the other of either I + i*Q, or I- i*Q.

An image-band processing unit 1150 is configured to identify an interference window, estimate an interference crossing moment, and mirror the image band IF signal over the interference window about the interference crossing moment. Identification of an interference window may be carried out as described above with respect to the flow-chart in figure 18. Selection of the actual window may be carried out by various different techniques. In one example technique, a first high pass filtered sample of the receiver signal for an interfered chirp is selected and the value for the first sample is compared to a power threshold, which, may be a fixed threshold or a variable threshold.

If the value of the current high pass filtered sample is determined to be less than the further threshold, then a next sample of the current interfered chirp is selected and processing returns, and the next sample is compared to the further threshold. Alternatively, if the value of the current sample is determined to exceed the threshold, then the current sample is flagged as interfered and thus part of the window, and then a next sample of the current interfered chirp is selected. A 1-d array WINDOW (FLAG) may be maintained for each interfered chirp including a field for each sample and where the value is set to zero for a non-interfered sample and the value is set to 1 for an interfered sample begin part of the window. Hence, the process repeats until all of the samples of the current interfered chirp have been evaluated against the threshold value.

In this example, the sample flags are used to define the window.

Mirroring the image band IAF signal over the interference window is carried out by the Hilbert transform discussed above.

The output from the image band processing 1150 is subtracted from the in-band IF signal IF+ in combinatorial logic, or digital subtractor oradder 1160, to provide an output signal 1170. The output is an thus interference-suppressed signal.

As already mentioned, subtracting a mirrored image band signal from the in-band signal will only be effective to remove an interference signal provided that interference signal exists in both the mirrored image band and the in-band. This may not be the case if the interference signal does not cross both bandwidths. For instance if the interference signal has a frequency chirp which is similar to that of the reflected signal, it may not cross both bandwidths during a single chirp. In such instances the interference suppression technique may not be effective, or may have only a partial effectiveness. It is generally considered that the present image interference suppression technique according to one or more embodiments may be suitable to be applied together with other interference mitigating techniques.

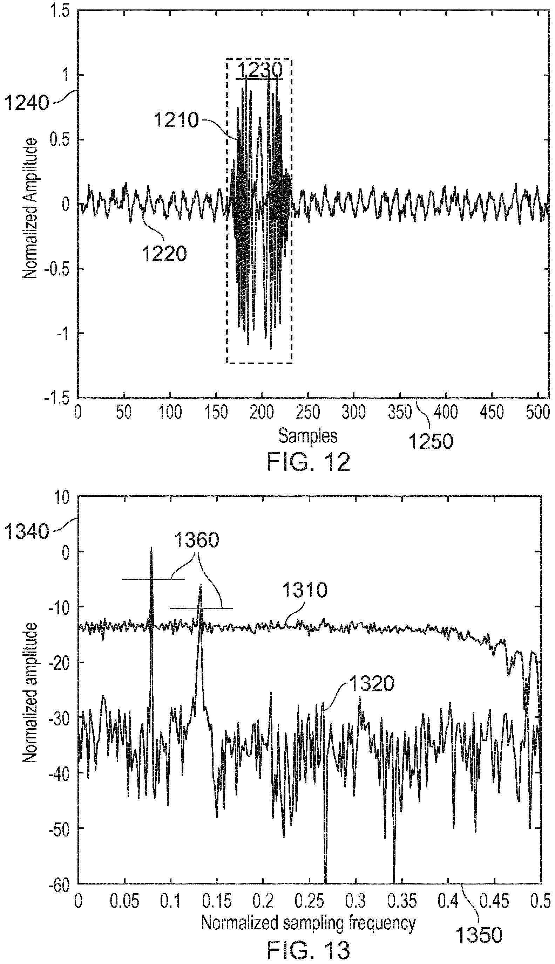

Figures 12 to 17 show various experimental waveforms associated with the interference suppression techniques.

Figure 12 shows an example radar range profile, plotted in the time domain as normalised amplitude 1240 against samples 1250, at 1210 in which an incoherence interference signal is present in 20% (e.g. 1 out of 5) of the chirps. In comparison with a signal where there is no interference, shown at 1220. As can be seen, the interference only affects a limited window 1230in time. However, when viewing the same data in the frequency domain, as shown at figure 13 which shows the radar range profile as normalised amplitude 1340 against frequency 1350, it is apparent that the signal including interference 1310 affects the entire in-band frequency range, to the extent that the peaks 1630 beats of the signal without any interference 1320 are only just visible above the apparent "noise floor" produced by the interference 1310.

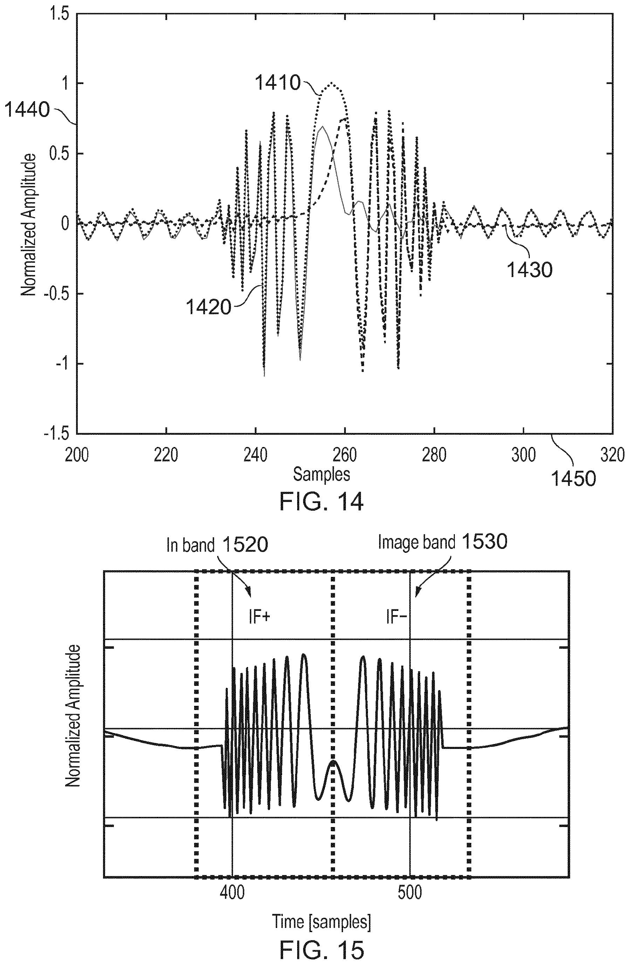

Figure 14 simulates a down converted interference signal (with thermal noise including some in the simulation), plotting amplitude 1440 against samples 1450, in a real receiver at 1410, and separate in-band (IF+) signal and image band (IF-)signal at 1420 and 1430 respectively. As can be seen from the diagram, the interference signal has symmetrical amplitude and phase changes with respect to the moments that the interference chirp intersect a "notional" transmitted chirp.

Figure 15 simulates the same down converted interference signal (but this time excluding the thermal noise to illustrate more clearly the symmetrical property of the signal), plotting amplitude 1440 against samples 1450, in a real receiver at 1510, to illustrate the symmetrical in-band and image band aspects.

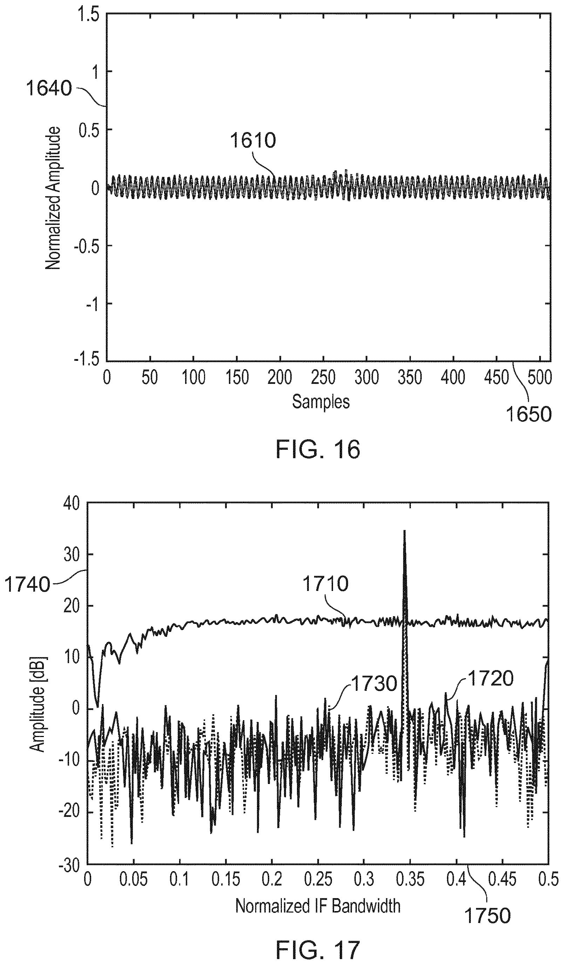

Figures 16 and 17 illustrate the interference suppression technique: figure 16 shows a signal 1610 without interference, plotted in the time domain as normalised amplitude 1640 against samples 1650. The figure also includes a second waveform, which is not visible since it directly overlaps the signal 1610: the second waveform is the time domain waveform of signal having interference which is well suppressed: in other words applying the interference suppression technique to the signal results in a signal which directly overlaps the original signal with no interference.

Figure 17 shows the plot of amplitude 1740 against frequency 1750 in the IF band, that is to say the "spectrum plot" for the signals shown in the time domain in figures 16 and 14. At 1710 is shown the signal including a crossing interference (as depicted in figure 14): the interference provides a "noise" floor of at about 15 dB. After applying the signal suppression techniques the signal is re-plotted at 1720 (i.e. this correspond to the time domain waveform of figure 16). It can be seen that the noise floor has been significantly reduced to between -10 and -5 dB. Moreover, this noise floor is very similar to original signal without any interferer, which is plotted at 1730. As can be clearly seen, the beat at about 0.35 is only about 20 dB above the noise for the signal including interference; conversely after interference suppression the signal is 40 dB above the noise.

For the sake of brevity, the following may at times refer to a "received" or "reflected" chirp, but it will be understood that this may simply be short hand for the signal in the receiver channel during the data acquisition period associated with a transmitted chirp, as in some circumstances no reflected chirp signal may be received (e.g. if there are no reflector objects) or the reflected chirp signal may be too weak to be discernible by the receiver (as discussed in greater detail below).

From reading the present disclosure, other variations and modifications will be apparent to the skilled person. Such variations and modifications may involve equivalent and other features which are already known in the art of FMCW or chirped radar and which may be used instead of, or in addition to, features already described herein.

References herein to "signals", when applied to the digital processing part of a receiver may refer to streams or sets of digital data.

## Claims

1. A digital signal processing, DSP, unit (138), for a frequency modulated continuous wave, FMCW, radar receiver module and configured to receive a digital in-phase signal (1120) and a digital quadrature signal (1125), wherein

   the digital signal processing unit comprises:

   a processing subunit (1100), configured to provide an in-band intermediate frequency, IF, signal and an image-band IF signal; wherein an image-band processing unit (1150) comprised by the processing subunit (1100) is configured to identify an interference window, estimate an interference crossing moment of an interfering signal with a transmitted FMCW radar signal and mirror the image band IF signal over the interference window about the interference crossing moment; and combinatorial logic (1160) comprised by the processing subunit (1100) is configured to subtract the mirrored image-band IF signal from the in-band IF signal over at least an in-band half of the interference window to provide an interference-suppressed signal (1170);

   wherein the processing subunit (1100) further comprises:

   a delay unit (1110) configured to delay the digital in-phase signal; a transform unit (1130) configured to apply a Hilbert transform to the digital quadrature signal; further combinatorial logic unit (1140) configured to add the delayed digital in-phase signal and the Hilbert-transformed digital quadrature signal to provide one of the in-band IF signal and the image-band IF signal; and yet further combinatorial logic unit (1145) configured to subtract the Hilbert-transformed digital quadrature signal from the delayed digital in-phase signal to provide the other of the in-band IF signal and the image-band IF signal; wherein the image-band processing unit is configured to identify the interference window from the image band IF signal, by comparing the power in the signal over a time period with a power threshold and wherein the interference window consists of an in band half and an image band half; and wherein the processing subunit further comprises a power-check unit configured to check the power in each of the image-band IF signal and a high-pass filtered version of the in-band IF signal, to identify a crossing-interference chirp, and wherein the estimation of the interference crossing moment is performed only in response to identification of crossing-interference chirp wherein the interference crossing moment represents when an interference signal frequency crosses a transmitted signal frequency of the FMCW radar signal.

2. A DSP unit as claimed in claim 1, wherein the combinatorial logic is configured to subtract the mirrored signal from the in-band IF signal over the interference window.

3. A DSP unit as claimed in any preceding claim, wherein the image-band processing unit (1150) is configured to mirror the image band IF signal, across the interference window, about the interference crossing moment, only in response to identification of said crossing-interference chirp.

4. A DSP unit as claimed in any preceding claim, wherein the power check unit is configured to apply a threshold level corresponding to a noise floor and to identify the crossing-interference chirp in response to the signal exceeding the threshold level.

5. A DSP unit as claimed in any preceding claim, wherein the digital signal processing unit further comprises means to select the interference window by comparing samples with a threshold power.

6. A DSP unit a claim in any preceding claim, further comprising further means for interference mitigation.

7. A frequency modulated continuous wave, FMCW, radar receiver module configured to suppress interference and comprising:

the DSP unit according to any preceding claim; a front-end unit configured to receive a radar signal and provide the digital in-phase signal and the digital quadrature signal.

8. A FMCW radar receiver module as claimed in claim 7 wherein the front-end unit comprises a low noise amplifier (910), a quadrature mixer (928), and first and second IF baseband circuit chains each comprising a variable gain amplifier (930) bandpass filters (930), and an analogue-to-digital converter, ADC (932).

9. A method of interference suppression in a FMCW radar signal, the method comprising:

extracting a digital in-phase signal (1120) and a digital quadrature signal (1125) from the received FMCW radar signal; deriving an in-band IF signal and an image-band IF signal from the digital in-phase signal (1120) and the digital quadrature signal (1125) by applying a Hilbert transform to the digital quadrature signal (1125) to provide a transformed signal, subtracting the transformed signal from a delayed version of the digital in-phase signal (1120) to provide the image-band IF signal, and adding the transformed signal to the delayed version of the digital in-phase signal (1120) to provide the in-band IF signal; identifying an interference window from the image-band IF signal by comparing the power in the signal over a time period with a power threshold and wherein the interference window consists of an in band half and an image band half; estimating a crossing moment of an interfering signal with the FMCW radar signal by checking the power in each of the image-band IF signal and a high-pass filtered version of the in-band IF signal, to identify a crossing-interference chirp, and wherein the estimation of the interference crossing moment is performed only in response to identification of the crossing-interference chirp wherein the interference crossing moment represents when an interfering signal frequency crosses a transmitted signal frequency of the FMCW radar signal; establishing whether the interfering signal crosses both the in-band and the image-band frequency range; mirroring the image-band IF signal over the interference window about the crossing moment; and subtracting the mirrored image-band IF signal from the in-band IF signal over at least an in-band half of the interference window to provide an interference-suppressed signal (1170).

10. The method of claim 9, wherein said mirroring and subtracting comprises:

mirroring the image-band IF signal, in the time domain, about the crossing moment, to provide the mirrored image-band IF signal; and subtracting the mirrored image-band IF signal from the in-band IF signal, to provide the interference-suppressed IF signal (1170).

11. The method of any of claims 9 to 10, wherein extracting the digital in-phase signal and the digital quadrature signal from the received radar signal comprises receiving the FMCW radar signal, downconverting the radar signal to an IF signal and digitising the IF signal to provide the digital in-phase signal and the digital quadrature signal.

12. The method of any of claims 9 to 11, further comprising applying at least one further interference mitigation technique.


**Patentansprüche**

1. Digitalsignalverarbeitungs-,DSP-,Einheit (138) für ein Empfängermodul eines frequenzmodulierten Dauerstrich-,FMCW-,Radars und konfiguriert zum Empfangen eines digitalen Inphase-Signals (1120) und eines digitalen Quadratursignals (1125), wobei die Digitalsignalverarbeitungseinheit umfasst:

eine Verarbeitungsuntereinheit (1100), die zum Bereitstellen eines Zwischenfrequenz-,ZF-,Inband-Signals und eines ZF-Bildbandsignals konfiguriert ist;
wobei eine Bildbandverarbeitungseinheit (1150), die in der Verarbeitungsuntereinheit (1100) enthalten ist, zum Identifizieren eines Störungsfensters, Schätzen eines Störungskreuzungszeitpunkts eines Störsignals mit einem gesendeten FMCW-Radarsignal und Spiegeln des ZF-Bildbandsignal über das Störungsfenster um den Störungskreuzungszeitpunkt konfiguriert ist; und
kombinatorische Logik (1160), die in der Verarbeitungsuntereinheit (1100) enthalten ist, zum Subtrahieren des gespiegelten ZF-Bildbandsignals von dem ZF-Inband-Signal über mindestens eine Inband-Hälfte des Störungsfensters konfiguriert ist, um ein störungsunterdrücktes Signal (1170) bereitzustellen;
wobei die Verarbeitungsuntereinheit (1100) ferner umfasst:

eine Verzögerungseinheit (1110), die zum Verzögern des digitalen Inphase-Signals konfiguriert ist;
eine Transformationseinheit (1130), die zum Anwenden einer Hilbert-Transformation auf das digitale Quadratursignal konfiguriert ist; eine weitere kombinatorische Logikeinheit (1140), die zum Addieren des verzögerten digitalen Inphase-Signals und des Hilbert-transformierten digitalen Quadratursignals konfiguriert ist, um eines von dem ZF-Inband-Signal und dem ZF-Bildbandsignal bereitzustellen; und noch eine weitere kombinatorische Logikeinheit (1145), die zum Subtrahieren des Hilbert-transformierten digitalen Quadratursignals von dem verzögerten digitalen Inphase-Signal konfiguriert ist, um das andere von dem ZF-Inband-Signal und dem ZF-Bildbandsignal bereitzustellen;
wobei die Bildbandverarbeitungseinheit so konfiguriert ist, dass sie das Störungsfenster aus dem ZF-Bildbandsignal durch Vergleichen der Leistung im Signal über einen Zeitraum mit einer Leistungsschwelle identifiziert, und wobei das Störungsfenster aus einer Inband-Hälfte und einer Bildbandhälfte besteht; und
wobei die Verarbeitungsuntereinheit ferner eine Leistungsprüfungseinheit umfasst, die zum Prüfen der Leistung in jedem von dem ZF-Bildband-Signal und einer hochpassgefilterten Version des ZF-Inband-Signals konfiguriert ist, um einen Kreuzungsstörungschirp zu identifizieren, und wobei die Schätzung des Störungskreuzungszeitpunkts nur in Reaktion auf eine Identifizierung eines Kreuzungsstörungschirps durchgeführt wird, wobei der Störungskreuzungszeitpunkt den Zeitpunkt darstellt, zu dem eine Störsignalfrequenz eine Sendesignalfrequenz des FMCW-Radarsignals kreuzt.

2. DSP-Einheit nach Anspruch 1, wobei die kombinatorische Logik so konfiguriert ist, dass sie das gespiegelte Signal von dem ZF-Inband-Signal über das Störungsfenster subtrahiert.

3. DSP-Einheit nach einem der vorhergehenden Ansprüche, wobei die Bildbandverarbeitungseinheit (1150) so konfiguriert ist, dass sie das ZF-Bildbandsignal nur in Reaktion auf die Identifizierung des Kreuzungsstörungschirps über das Störungsfenster um den Störungskreuzungszeitpunkt spiegelt.

4. DSP-Einheit nach einem der vorhergehenden Ansprüche, wobei die Leistungsprüfungseinheit so konfiguriert ist, dass sie einen Schwellenpegel anwendet, der einem Grundrauschen entspricht, und den Kreuzungsstörungschirp in Reaktion darauf identifiziert, dass das Signal den Schwellenpegel überschreitet.

5. DSP-Einheit nach einem der vorhergehenden Ansprüche, wobei die Digitalsignalverarbeitungseinheit ferner Mittel zum Auswählen des Störungsfensters durch Vergleichen von Abtastwerten mit einer Schwellenleistung umfasst.

6. DSP-Einheit nach einem der vorhergehenden Ansprüche, ferner umfassend weitere Mittel zur Störungsminderung.

7. Empfangsmodul eines frequenzmodulierten Dauerstrich-,FMCW-,Radars, das zum Unterdrücken von Störung konfiguriert ist und umfasst:

   die DSP-Einheit nach einem der vorhergehenden Ansprüche;
   eine Frontend-Einheit, die zum Empfangen eines Radarsignals und Bereitstellen des digitalen Inphase-Signals und des digitalen Quadratursignals konfiguriert ist.

8. FMCW-Radarempfängermodul nach Anspruch 7, wobei die Frontend-Einheit einen rauscharmen Verstärker (910), einen Quadraturmischer (928) und erste und zweite ZF-Basisbandschaltungsketten umfasst, die jeweils einen Verstärker mit veränderlicher Verstärkung (930), ein Bandpassfilter (930) und einen Analog-Digital-Wandler, ADC, (932) umfassen.

9. Verfahren zur Unterdrückung von Störung in einem FMCW-Radarsignal, wobei das Verfahren umfasst:

   Extrahieren eines digitalen Inphase-Signals (1120) und eines digitalen Quadratursignals (1125) aus dem empfangenen FMCW-Radarsignal;
   Ableiten eines ZF-Inband-Signals und eines ZF-Bildbandsignals von dem digitalen Inphase-Signal (1120) und dem digitalen Quadratursignal (1125) durch Anwenden einer Hilbert-Transformation auf das digitale Quadratursignal (1125) um ein transformiertes Signal bereitzustellen, Subtrahieren des transformierten Signals von einer verzögerten Version des digitalen Inphase-Signals (1120), um das ZF-Bildbandsignal bereitzustellen, und Addieren des transformierten Signals zu der verzögerten Version des digitalen Inphase-Signals (1120), um das ZF-Inband-Signal bereitzustellen; Identifizieren eines Störungsfensters aus dem ZF-Bildbandsignal durch Vergleichen der Leistung im Signal über einen Zeitraum mit einer Leistungsschwelle, und wobei das Störungsfenster aus einer Inband-Hälfte und einer Bildbandhälfte besteht;
   Schätzen eines Kreuzungszeitpunkts eines Störsignals mit dem FMCW-Radarsignal durch Prüfen der Leistung in jedem von dem ZF-Bildband-Signal und einer hochpassgefilterten Version des ZF-Inband-Signals, um einen Kreuzungsstörungschirp zu identifizieren, und wobei die Schätzung des Störungskreuzungszeitpunkts nur in Reaktion auf eine Identifizierung des Kreuzungsstörungschirps durchgeführt wird, wobei der Störungskreuzungszeitpunkt den Zeitpunkt darstellt, zu dem eine Störsignalfrequenz eine Sendesignalfrequenz des FMCW-Radarsignals kreuzt;
   Feststellen, ob das Störsignal sowohl den Inband- als auch den Bildband-Frequenzbereich kreuzt;
   Spiegeln des ZF-Bildbandsignals über das Störungsfensters um den Kreuzungszeitpunkt; und Subtrahieren des gespiegelten ZF-Bildbandsignals von dem ZF-Inband-Signal über mindestens eine Inband-Hälfte des Störungsfensters, um ein störungsunterdrücktes Signal (1170) bereitzustellen.

10. Verfahren nach Anspruch 9, wobei das Spiegeln und das Subtrahieren umfassen:
    Spiegeln des ZF-Bildbandsignals in der Zeitdomäne um den Kreuzungszeitpunkt, um das gespiegelte ZF-Bildbandsignal bereitzustellen; und Subtrahieren des gespiegelten ZF-Bildbandsignals von dem ZF-Inband-Signal, um das störungsunterdrückte ZF-Signal (1170) bereitzustellen.

11. Verfahren nach einem der Ansprüche 9 bis 10, wobei das Extrahieren des digitalen Inphase-Signals und des digitalen Quadratursignals aus dem empfangenen Radarsignal ein Empfangen des FMCW-Radarsignals, Abwärtsmischen des Radarsignals auf ein ZF-Signal und Digitalisieren des ZF-Signals umfasst, um das digitale Inphase-Signal und das digitale Quadratursignal bereitzustellen.

12. Verfahren nach einem Ansprüche 9 bis 11, ferner umfassend ein Anwenden mindestens einer weiteren Störungsminderungstechnik.

**Revendications**

1. Unité de traitement de signal numérique, DSP, (138), pour un module récepteur radar à onde continue modulée en fréquence, FMCW, et configurée pour recevoir un signal en phase numérique (1120) et un signal en quadrature numérique (1125), l'unité de traitement de signal numérique comprenant :

une sous-unité de traitement (1100), configurée pour fournir un signal à fréquence intermédiaire, IF, intrabande et un signal IF en bande d'image ; une unité de traitement en bande d'image (1150) comprise par la sous-unité de traitement (1100) étant configurée pour identifier une fenêtre d'interférence, estimer un instant de croisement d'interférence d'un signal d'interférence avec un signal radar FMCW transmis et refléter le signal IF en bande d'image sur la fenêtre d'interférence autour de l'instant de croisement d'interférence ; et

une logique combinatoire (1160) comprise par la sous-unité de traitement (1100) étant configurée pour soustraire le signal IF en bande d'image mis en miroir du signal IF intrabande sur au moins une demi intrabande de la fenêtre d'interférence pour fournir un signal à interférence supprimée (1170) ; la sous-unité de traitement (1100) comprenant en outre :

> une unité de retardement (1110) configurée pour retarder le signal en phase numérique ;
> une unité de transformation (1130) configurée pour appliquer une transformée d'Hilbert au signal en quadrature numérique ;
> une autre unité de logique combinatoire (1140) configurée pour ajouter le signal en phase numérique retardé et le signal en quadrature numérique à transformation d'Hilbert pour fournir un du signal IF intrabande et du signal IF en bande d'image ; et encore une autre unité de logique combinatoire (1145) configurée pour soustraire le signal en quadrature numérique à transformation d'Hilbert du signal en phase numérique retardé pour fournir l'autre du signal IF intrabande et du signal IF en bande d'image ;
> l'unité de traitement de bande d'image étant configurée pour identifier la fenêtre d'interférence à partir du signal IF en bande d'image, en comparant la puissance dans le signal sur une période de temps avec un seuil de puissance et, la fenêtre d'interférence consistant en une demi intrabande et une demi bande d'image ;
> et
> la sous-unité de traitement comprenant en outre une unité de vérification de puissance configurée pour vérifier la puissance dans chacun du signal IF en bande d'image et d'une version à filtrage passe-haut du signal IF intrabande, pour identifier un chirp d'interférence de croisement, et l'estimation de l'instant de croisement d'interférence étant réalisée uniquement en réponse à l'identification d'un chirp d'interférence de croisement, l'instant de croisement d'interférence représentant le moment où une fréquence de signal d'interférence croise une fréquence de signal émis du signal radar FMCW.

2. Unité DSP selon la revendication 1, la logique combinatoire étant configurée pour soustraire le signal mis en miroir du signal IF intrabande sur la fenêtre d'interférence.

3. Unité DSP selon l'une quelconque des revendications précédentes, l'unité de traitement de bande d'image (1150) étant configurée pour mettre en miroir le signal IF en bande d'image, sur la fenêtre d'interférence, autour de l'instant de croisement d'interférence, uniquement en réponse à l'identification dudit chirp d'interférence de croisement.

4. Unité DSP selon l'une quelconque des revendications précédentes, l'unité de vérification de puissance étant configurée pour appliquer un niveau seuil correspondant à un palier de bruit et pour identifier le chirp d'interférence de croisement en réponse au fait que le signal dépasse le niveau seuil.

5. Unité DSP selon l'une quelconque des revendications précédentes, l'unité de traitement de signal numérique comprenant en outre des moyens pour sélectionner la fenêtre d'interférence en comparant des échantillons avec une puissance seuil.

6. Unité DSP selon l'une quelconque des revendications précédentes, comprenant en outre des moyens pour une atténuation d'interférence.

7. Module récepteur radar à onde continue modulée en fréquence, FMCW, configuré pour supprimer une interférence et comprenant :

> l'unité DSP selon l'une quelconque des revendications précédentes ;
> une unité frontale configurée pour recevoir un signal radar et fournir le signal en phase numérique et le signal en quadrature numérique.

8. Module récepteur radar FMCW selon la revendication 7, l'unité frontale comprenant un amplificateur à bas bruit (910), un mélangeur en quadrature (928), et des première et deuxième chaînes de circuit de bande de base IF comprenant chacune un amplificateur à gain variable (930), des filtres passe-bande (930) et un convertisseur analogique-à-numérique, CAN (932).

9. Procédé de suppression d'interférence dans un signal radar FMCW, le procédé comprenant :

l'extraction d'un signal en phase numérique (1120) et d'un signal en quadrature numérique (1125) du signal radar FMCW reçu ;

la dérivation d'un signal IF intrabande et d'un signal IF en bande d'image à partir du signal en phase numérique (1120) et du signal en quadrature numérique (1125) en appliquant une transformée d'Hilbert au signal en quadrature numérique (1125) pour fournir un signal transformé, la soustraction du signal transformé d'une version retardée du signal en phase numérique (1120) pour fournir le signal IF en bande d'image, et l'ajout du signal transformé à la version retardée du signal en phase numérique (1120) pour fournir le signal IF en bande ; l'identification d'une fenêtre d'interférence à partir du signal IF en bande d'image en comparant la puissance dans le signal sur une période de temps avec un seuil de puissance et, la fenêtre d'interférence consistant en une demi intrabande et une demi bande d'image ;

l'estimation d'un instant de croisement d'un signal d'interférence avec le signal radar FMCW en vérifiant la puissance dans chacun du signal IF en bande d'image et d'une version à filtrage passe-haut du signal IF intrabande, pour identifier un chirp d'interférence de croisement, et l'estimation de l'instant de croisement d'interférence étant réalisée uniquement en réponse à l'identification du chirp d'interférence de croisement, l'instant de croisement d'interférence représentant le moment où une fréquence de signal interférant croise une fréquence de signal émis du signal radar FMCW ;

l'établissement si le signal interférant croise à la fois la plage de fréquence d'intrabande et la plage de fréquence de bande d'image ;

la mise en miroir du signal IF en bande d'image sur la fenêtre d'interférence autour de l'instant de croisement ; et la soustraction du signal IF en bande d'image mis en miroir du signal IF intrabande sur au moins une demi intrabande de la fenêtre d'interférence pour fournir un signal à interférence supprimée (1170).

10. Procédé selon la revendication 9, lesdites mise en miroir et soustraction comprenant :

    la mise en miroir du signal IF en bande d'image, dans le domaine temporel, autour de l'instant de croisement, pour fournir le signal IF en bande d'image mis en miroir ; et
    la soustraction du signal IF en bande d'image mis en miroir du signal IF intrabande, pour fournir le signal IF à interférence supprimée (1170).

11. Procédé selon l'une quelconque des revendications 9 à 10, l'extraction du signal en phase numérique et du signal en quadrature numérique à partir du signal radar reçu comprenant la réception du signal radar FMCW, la conversion à la baisse du signal radar en un signal IF et la numérisation du signal IF pour fournir le signal en phase numérique et le signal en quadrature numérique.

12. Procédé selon l'une quelconque des revendications 9 à 11, comprenant en outre l'application d'au moins une autre technique d'atténuation d'interférence.

FIG. 1

FIG. 2

150

Transmit cycle
of chirps — 152

Receive — 154

Detect
Interference — 156

Avoid and/or
suppress — 158

Next cycle of
chirps — 160

162

FIG. 3

FIG. 4

FIG. 5

FIG. 6

FIG. 7

FIG. 8

FIG. 9

FIG. 10

1100

1110          1140

I data                                    Digital signal processing          1160
                  delay                                                      1170

1120                                      IF+              +

                                 +                          −

                              Q data                IF−    Extract and process the
                                                          interference signal          1150
                  Hilbert
                  transform
1125                                      Signal in the image band

1130                        1145

FIG. 11

FIG. 12

FIG. 13

FIG. 14

FIG. 15

FIG. 16

FIG. 17

FIG. 18

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20160291130 A1